# EUROPÄISCHE PATENTSCHRIFT

(11) **EP 1 398 108 B1**
(45) Veröffentlichungstag und Bekanntmachung des Hinweises auf die Patenterteilung: **12.04.2006**
(21) Anmeldenummer: 03016278.8
(22) Anmeldetag: 18.07.2003
(51) Int. Cl.: B23P 19/08, B23P 19/00, B65D 85/02

(54) **Verfahren zum Positionieren von stossorientiert ausgerichteten Kolbenringen unter Einsatz eines Kolbenringmagazines**
Method of positioning piston rings with butting edges aligned, using a piston ring magazine
Procédé de positionnement d'un segment de piston avec des extrémités orientées utilisant un magasin de segments de piston

(30) Priorität: 12.09.2002 DE 10242279
(43) Veröffentlichungstag der Anmeldung: 17.03.2004
(73) Patentinhaber: Federal-Mogul Nürnberg GmbH, 90441 Nürnberg (DE)
(72) Erfinder: Feulner, Peter, 90455 Nürnberg (DE); Porstner, Klaus, 90513 Zirndorf (DE); Ziegler, Manfred, 90443 Nürnberg (DE)

(56) Entgegenhaltungen:
- DE-A- 19 604 711
- DE-C- 3 735 878
- GB-A- 1 279 826
- US-A- 5 737 831
- DATABASE WPI Section PQ, Week 198706 Derwent Publications Ltd., London, GB; Class P54, AN 1987-014172 XP002258221 -& SU 1 237 317 A (OD KT I PORSHNEVYM KOLTSAM), 15. Juni 1986 (1986-06-15)
- PATENT ABSTRACTS OF JAPAN vol. 006, no. 109 (M-137), 19. Juni 1982 (1982-06-19) -& JP 57 041147 A (NIPPON PISTON RING CO LTD), 8. März 1982 (1982-03-08)

## Beschreibung

Die Erfindung betrifft ein Verfahren zum Positionieren von stoßorientiert ausgerichteten Kolbenringen im Bereich eines Kolbenringmagazines, siehe z.B. DE 3735878, und ein Kolbenringmagazin, siehe z.B. DE 19604711

Montagevorrichtungen für Kolbenringe zählen zum allgemeinen Stand der Technik. Hierbei werden üblicherweise die Kolbenringe vertikal von oben auf einen, auch als Kolbenringmagazin bezeichneten Zuführdom aufgefädelt. Dies geschieht in der Regel von Hand. Bekanntermaßen weisen Kolbenringe einen sogenannten Stoß auf, der zur vereinfachten Montage sämtlicher Kolbenringe innerhalb des Kolbenringmagazines stets an der gleichen Stelle sein muß, damit die Kolbenringmontageeinrichtung die einzelnen Kolbenringe auch exakt aufnehmen und in der zugehörigen Nut des Kolbens positionieren kann.

Nur beispielhaft sei auf die US 5,737,831, die JP-A 55-011773 sowie die EP-C 0457627 verwiesen. Dem angeführten Stand der Technik ist nachteilig zu entnehmen, dass die Zuführung der Kolbenringe stets vertikal von oben erfolgen muß und demzufolge ein manueller Eingriff durch das Bedienpersonal notwendig ist, bei welchem sich Fehler bezüglich der Stoßorientierung der im Packet zu magazinierenden Kolbenringe nicht immer ausschließen lassen. Dabei kann es unter Umständen zu

Montageunterbrechungen kommen, die auch zu Schäden an einzelnen Kolbenringen/Kolben bei der Montage führen können. Sollten diese Schäden nicht unverzüglich erkannt werden, macht sich selbiges im Betriebszustand der fertigen Verbrennungskraftmaschine nachteilig bemerkbar und kann nur unter erhöhtem Aufwand wieder repariert werden.

Im DE-Gbm 296 20 171 ist eine Vorrichtung zur Aufnahme von mehreren horizontal nebeneinander liegenden Tragstangen bekannt geworden, auf denen eine Vielzahl von axial hintereinander angeordneten ringförmigen Werkstücken, insbesondere Kolbenringe, lagern. Die Vorrichtung besteht aus einer Kunststoffwanne mit diametral gegenüberliegend angeordneten Platten, in denen etwa dem halben Querschnittsprofil der Tragstangen angepaßte Ausnehmungen angeordnet sind. Die als Kunststoffwanne ausgebildete Vorrichtung ist als Einlagewanne für Transportkisten ausgebildet.

Der Erfindung liegt die Aufgabe zugrunde, ein Verfahren zum Positionieren von stoßorientiert ausgerichteten Kolbenringen im Bereich eines zur Kolbenringmontage vorgesehenen Kolbenringmagazines vorzuschlagen, bei welchem sichergestellt wird, dass in vereinfachter Bestückungsform sämtliche Kolbenringe stoßorientiert und bedarfsweise auch maschinell im Bereich des Kolbenringmagazines platziert werden können. Ferner soll ein Kolbenringmagazin vorgeschlagen werden, das einfach im Aufbau und ebenso einfach bei der Bestückung desselben ausgebildet ist.

Diese Aufgabe wird einerseits gelöst durch ein Verfahren zum Positionieren von stoßorientiert ausgerichteten Kolbenringen im Bereich eines zur Kolbenringmontage vorgesehenen Kolbenringmagazines, indem zumindest ein Teil des vertikal angeordneten Kolbenringmagazines dergestalt abgewinkelt wird, dass das Teil aus der vertikalen Montageposition in eine im wesentlichen horizontale Beschickungsposition überführbar ist, in dieser Beschickungsposition die auf einem länglichen Transporthilfsmittel formschlüssig angeordneten Kolbenringe zusammen mit dem Transporthilfsmittel in einen dafür vorgesehenen Aufnahmebereich des abgewickelten Teiles formschlüssig eingebracht werden, ein Sicherungselement in dem dem vertikalen Teil zugewandten kolbentingseitigen Endbereich des Teiles eingebracht und das abgewinkelte Teil anschließend wieder in seine vertikale Ausgangsposition zurückgeschwenkt und mit dem vertikalen Teil in Wirkverbindung gebracht wird. Vorteilhafte Weiterbildungen des erfindungsgemäßen Verfahrens sind den zugehörigen Unteransprüchen zu entnehmen.

Diese Aufgabe wird ebenfalls gelöst durch ein Kolbenringmagazin, einsetzbar zur Kolbenringmontage, bestehend aus einem oberen und einem unteren Teil, wobei das Ober- gegenüber dem Unterteil relativ bewegbar ist, dergestalt, dass das Oberteil länger als das Unterteil ausgebildet ist und das Oberteil aus einer vertikalen Montageposition in eine im wesentlichen horizontale Beschickungsposition führbar ist.

Vorteilhafte Weiterbildungen des erfindungsgemäßen Kolbenringmagazines sind den zugehörigen gegenständlichen Unteransprüchen zu entnehmen.

Kolbenringherstellerseitig können beispielsweise Transportvorrichtungen, wie sie in dem DE-Gbm 296 20 171 beschrieben sind, eingesetzt werden, um die gefertigten und bereits auf den als Tragstangen ausgebildeten Transporthilfsmitteln stoßorientiert aufgefädelten Kolbenringe an Drittfirmen zur Montage der Kolbenringe zu liefern. Hier können selbige entweder durch Bedienpersonen oder aber maschinell den Transportkisten entnommen und in den im wesentlichen horizontal abgewinkelten Bereich zusammen mit den Transporthilfsmitteln eingebracht werden. Das Sicherungselement verhindert hierbei, dass beim Aufrichten des im wesentlichen horizontal vorgesehenen Beschickungsbereiches ein Herunterrutschen einzelner Kolbenringe stattfinden kann. Ist der horizontale Beschickungsbereich wieder in der vertikalen Montageposition angekommen und sind die Kolbenringe bezüglich des unteren Teiles wieder stoßorientiert ausgerichtet, kann das Sicherungselement entfernt werden, so dass die Kolbenringe dann unter Eigengewicht auf den vertikalen Montagebereich (Unterteil) herabfallen können.

Je nach Ausbildung des Kolbenringmagazines kann es sinnvoll sein, das Oberteil gegenüber dem unteren Teil noch um 180° schwenkbar vorzusehen, damit die exakte Stoßorientierung zwischen Ober- und Unterteil gegeben ist.

Die Transportkiste kann somit als wiederverwendbares Transportmittel verwendet werden. Durch einfaches Abwinkeln (ggf. auch Schwenken) des Oberteiles gegenüber dem Unterteil wird eine im wesentlichen horizontale Beschickungsposition erreicht, die es auch der Bedienperson einfach macht, das Kolbenringmagazin ohne Schwierigkeiten zu bestücken. Hierbei werden keine einzelnen Kolbenringe mehr von Hand aufgefädelt, vielmehr wird das gesamte Transporthilfsmittel in das Kolbenringmagazin in gesicherter Form eingebracht, so dass die Montage der einzelnen stoßorientiert ausgerichteten Kolbenringe in einfacher und sicherer Form ohne Schwierigkeiten vonstatten gehen kann.

Der Erfindungsgegenstand ist anhand eines Ausführungsbeispieles in der Zeichnung dargestellt und wird wie folgt beschrieben. Es zeigen:
- Figur 1: Prinzipskizze des erfindungsgemäßen Kolbenringmagazines in teilweise abgewinkelter Form;
- Figuren 2 bis 4: Kolbenringmagazin gemäß Anspruch 1 in verschiedenen Ansichten;
- Figur 5: Sicherungselement zum Rückhalten einzelner Kolbenringe im abgewinkelten Teil des Kolbenringmagazins.

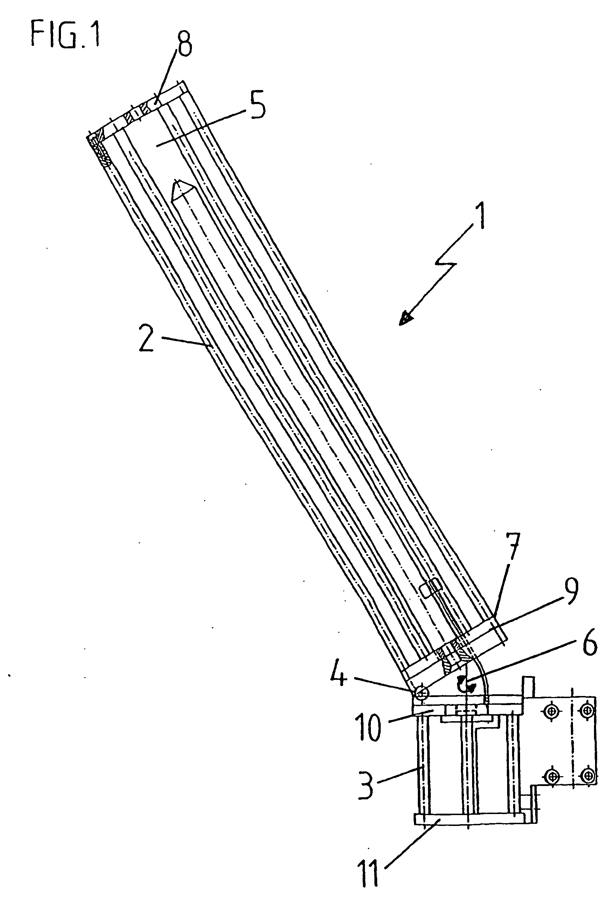

Figur 1 zeigt das erfindungsgemäße Kolbenringmagazin 1, gebildet durch ein oberes Teil 2 sowie ein unteres Teil 3, die mittels eines Scharnieres 4 schwenk- und drehbeweglich miteinander verbunden sind. Das Oberteil 2 ist gegenüber dem Unterteil 3 aus einer vertikalen Montageposition in eine im wesentlichen horizontale Beschickungsposition schwenkbar, wodurch die Beschickung des Oberteiles 2 vereinfacht ist. Es sei für dieses Beispiel vorausgesetzt, dass die bereits stoßorientiert ausgerichteten Kolbenringe mittels einer im DE-Gbm 296 20 171 beschriebenen Transportmittel angeliefert werden, so dass eine Bedienperson die in dem Transportmittel vorgesehenen und die Kolbenringe stoßorientiert haltenden Transporthilfsmittel entnehmen und in den Bereich 5 des Oberteiles 2 zusammen mit dem Transporthilfsmittel in gesicherter Form einlegen kann.

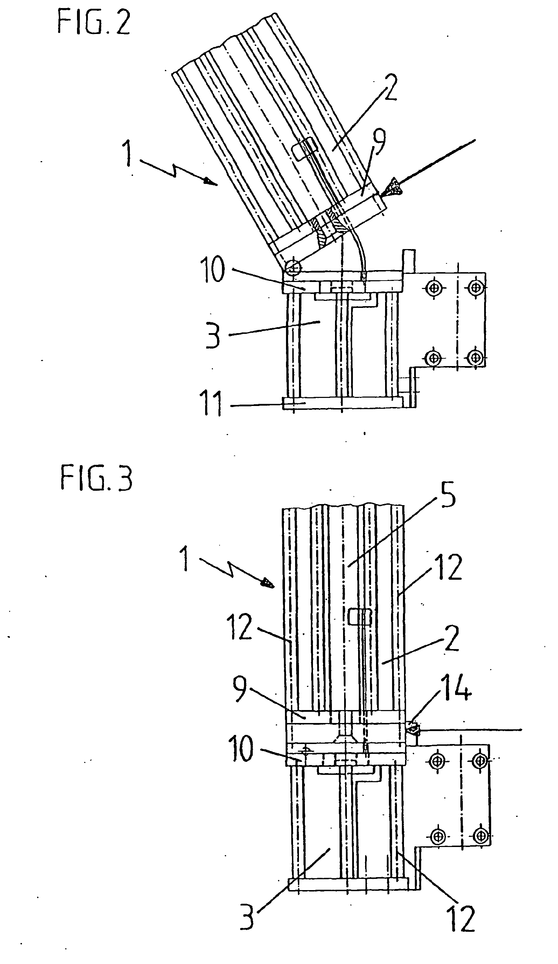

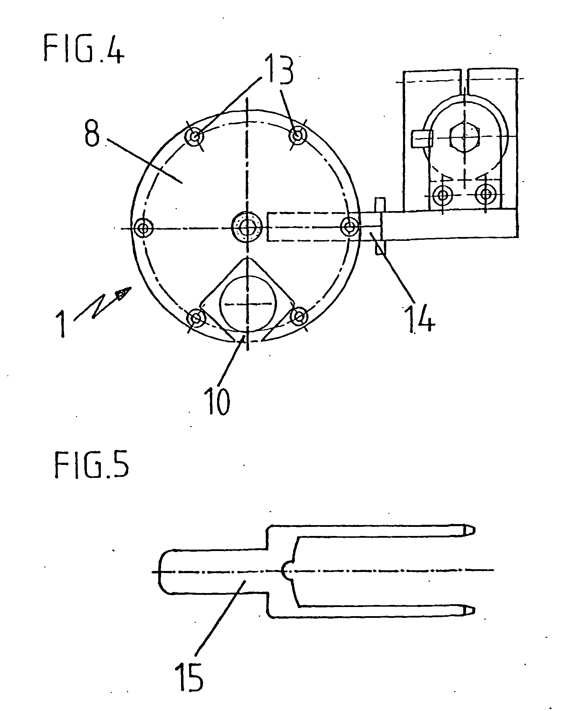

Zur Beschickung des Kolbenringmagazins 1 wird das Oberteil 2 um die Schwenkachse 6 um 180° aus der vertikalen Montageposition herausgeschwenkt. Anschließend wird das Oberteil 2 gegenüber dem Unterteil 3 um die Drehachse des Scharnieres 4 in eine im wesentlichen horizontale Beschickungsposition gekippt. Hier kann nun beispielsweise eine Bedienperson aus dem Transportmittel die darin vorgesehenen, in der Regel stangenartig ausgebildeten Transporthilfsmittel, beinhaltend die stoßorientiert ausgerichteten Kolbenringe, herausnehmen und in den Bereich 5 des Oberteiles 2 in gesicherter Form einbringen. Ein in den Folgefiguren näher beschriebenes Sicherungselement wird in dem dem Unterteil 3 zugewandten Endbereich 7 des Oberteiles 2 eingebracht, durch welches verhindert wird, dass beim Zurückschwenken des Oberteiles 2 in die vertikale Position einzelne Kolbenringe vom Oberteil 2, respektive dem Transporthilfsmittel, herabrutschen und möglicherweise einen Kolbenringstau verursachen. Ist das Oberteil 2 mit Kolbenringen bestückt, wird selbiges wieder in die vertikale Montageposition zurückgeschwenkt und zur Erzielung der exakten Stoßorientierung gegenüber dem Unterteil 3 wiederum um 180° gedreht. In dieser Position wird nun das Sicherungselement entfernt und die im Oberteil 2 vorgesehenen Kolbenringe fallen unter Eigengewicht auf das Unterteil 3, von welchem sie ihrer weiteren Verwendung zugeführt werden. In den Endbereichen sowohl des Oberteiles 2 als auch des Unterteiles 3 sind Kopf- und Fußplatten 8,9 bzw. 10,11 vorgesehen, wobei die Kopf- und Fußplatten 8,9 über entsprechende Aussparungen verfügen, die nur das Transporthilfsmittel des passenden Kolbenringes aufnehmen können. Somit kann ein- und dasselbe Kolbenringmagazin lediglich durch Austausch der Kopf- und Fußplatten 8,9 mit unterschiedlichsten Kolbenringen bestückt werden. Die Figuren 2 bis 4 zeigen das Kolbenringmagazin 1 in verschiedenen Ansichten. Figur 2 entspricht hierbei Figur 1.

Figur 3 zeigt das Kolbenringmagazin 1 in vertikaler Montageposition. Das Oberteil 2 befindet sich in ausgerichteter Form gegenüber dem Unterteil 3. Erkennbar ist der Aufnahmebereich 5 für das jeweilige Transporthilfsmittel. Sowohl das Ober- 2 als auch das Unterteil 3 bestehen aus stangenartigen Bauteilen 12, die mittels Schrauben 13 im Bereich der jeweiligen Kopf- und Fußplatte 8,9,10,11 verschraubt sind. Mit dem Bezugszeichen 14 ist die Einführnase des Unterteiles 3 gemeint, über welcher das Oberteil 2 nach dem Schwenken in die Vertikalposition und dem Verdrehen um 180° gegenüber dem Unterteil 3 dann zum Stehen kommt.

In Figur 5 ist ein als Rückhaltezange ausgebildetes Sicherungselement 15 dargestellt, das etwa auf Höhe des in den Figuren 2 und 3 dargestellten Pfeiles im Anschluß an die horizontale Beschickung eingebracht wird und nach Zurückschwenken des Oberteiles 2 in die vertikale Position und Ausrichtung des Oberteiles 2 gegenüber dem Unterteil 3 wieder entfernt wird, so dass die Kolbenringe nach Entfernen des Sicherungselementes 15 unter Eigengewicht auf das Unterteil 3 herabfallen können.

## Patentansprüche

1. Verfahren zum Positionieren von stoßorientiert ausgerichteten Kolbenringen im Bereich eines Kolbenringmagazines (1), indem zumindest ein Teil (2) des vertikal angeordneten Kolbenringmagazines (1) dergestalt abgewinkelt wird, dass das Teil (2) aus der vertikalen Montageposition in eine im wesentlichen horizontale Beschickungsposition überführbar ist, in dieser Beschickungsposition die auf einem länglichen Transporthilfsmittel formschlüssig angeordneten Kolbenringe zusammen mit dem Transporthilfsmittel in einen dafür vorgesehenen Aufnahmebereich (5) des abgewinkelten Teiles (2) formschlüssig eingebracht werden, ein Sicherungselement (15) in dem dem vertikalen Teil (3) zugewandten kolbenringseitigen Endbereich des Teiles (2) eingebracht und das abgewinkelte Teil (2) anschließend wieder in seine vertikale Ausgangsposition zurückgeschwenkt und mit dem vertikalen Teil (3) in Wirkverbindung gebracht wird.

2. Verfahren nach Anspruch 1, **dadurch gekennzeichnet, dass** das Teil (2) vor seiner Abwinklung aus einer. Montageposition heraus um einen definierten Winkel um seine Längsachse (6) gedreht und im Anschluß an die Zurückführung aus der im wesentlichen horizontalen Beschickungsposition in die vertikale Ausgangsposition wieder in die Montageposition zurückgedreht wird.

3. Verfahren nach Anspruch 1 oder 2, **dadurch gekennzeichnet, dass** im Anschluß an die Zurückführung des Teiles (2) in die Montageposition das Sicherungselement (15) entfernt wird, wodurch die Kolbenringe über einen Einführbereich (14) am unteren Teil (3) des Kolbenringmagazines (1) unter Eigengewicht in ihre Montageposition fallen.

4. Kolbenringmagazin, einsetzbar zur Kolbenringmontage, bestehend aus einem oberen (2) und einem unteren Teil (3), wobei das Ober- (2) gegenüber dem Unterteil (3) relativ bewegbar ist, **dadurch gekennzeichnet, dass** das Oberteil (2) länger als das Unterteil (3) ausgebildet ist und das Oberteil (2) aus einer vertikalen Montageposition in eine im wesentlichen horizontale Beschickungsposition führbar ist.

5. Kolbenringmagazin nach Anspruch 4, **dadurch gekennzeichnet, dass** das Oberteil (2) im wesentlichen der Länge eines mehrere Kolbenringe stoßorientiert und formschlüssig aufnehmenden Transporthilfsmittels entspricht.

6. Kolbenringmagazin nach Anspruch 4 oder 5, **dadurch gekennzeichnet, dass** das Transporthilfsmittel zumindest in durch Kopf- (8) und Fußplatten (9) gebildeten Endbereichen des Oberteiles (2) positionierbar ist.

7. Kolbenringmagazin nach einem der Ansprüche 4 bis 6, **dadurch gekennzeichnet, dass** das Ober- (2) mit dem Unterteil (3) über mindestens ein Scharnier (4) verbunden ist.

8. Kolbenringmagazin nach einem der Ansprüche 4 bis 7, **dadurch gekennzeichnet, dass** das Ober- (2) und das Unterteil (3) in zueinander ausgerichteter vertikaler Position relativ zueinander, insbesondere um 180°, verdrehbar sind.

9. Kolbenringmagazin nach einem der Ansprüche 4 bis 8, **dadurch gekennzeichnet, dass** das Ober- (2) und das Unterteil (3) durch das die Kolbenringe aufnehmende Transporthilfsmittel radial umgebende, in Umfangsrichtung zueinander beabstandete stangenartig ausgebildete Bauteile (12) gebildet ist, die im Bereich ihrer Enden in ring- oder scheibenartig ausgebildeten Kopf- (8) und Fußplatten (9) geführt sind.

10. Kolbenringmagazin nach einem der Ansprüche 4 bis 9, **gekennzeichnet durch** ein Sicherungselement (15), das im Anschluß an die Beschickung des Oberteiles (2) mit den Kolbenringen im dem Unterteil (3) zugewandten kolbenringseitigen Endbereich des Oberteiles (2) positionierbar ist.

11. Kolbenringmagazin nach einem der Ansprüche 4 bis 10, **dadurch gekennzeichnet, dass** das Sicherungselement (15) nach Art einer Kolbenringrückhaltezange ausgebildet ist.

12. Kolbenringmagazin nach einem der Ansprüche 4 bis 11, **gekennzeichnet durch** einen Magazinaufspanndorn, der mit dem Unterteil (3) in Wirkverbindung bringbar und im Bereich einer Kolbenringmontagestation positionierbar ist.

## Claims

1. Method for positioning piston rings aligned joint-orientated in the region of a piston ring magazine (1), in that at least one part (2) of the vertically disposed piston ring magazine (1) is angled over in such a manner that the part (2) can be transferred from the vertical fitting position into a substantially horizontal feeding position, in this feeding position the piston rings, which are disposed on a longitudinal transport aid in a form-fitting manner, are inserted in a form-fitting manner together with the transport aid into a receiving region (5) of the angled-over part (2) which is provided therefor, a securing element (15) is inserted into the piston ring-side end region of the part (2), which end region is orientated towards the vertical part (3), and the angled-over part (2) is subsequently pivoted back again into its vertical initial position and brought into operational connection with the vertical part (3).

2. Method according to claim 1, **characterised in that** the part (2), before being angled over, is rotated from a fitting position by a defined angle about its longitudinal axis (6) and subsequent to the return guidance out of the substantially horizontal feeding position into the vertical initial position is rotated back again into the fitting position.

3. Method according to claim 1 or 2, **characterised in that**, subsequent to the return guidance of the part (2) into the fitting position, the securing element (15) is removed, as a result of which the piston rings fall into their fitting position under their own weight via an introduction region (14) on the lower part (3) of the piston ring magazine (1).

4. Piston ring magazine, useable for piston ring fitting, comprising an upper part (2) and a lower part (3), the upper part (2) being relatively moveable with respect to the lower part (3), **characterised in that** the upper part (2) is configured longer than the lower part (3) and the upper part (2) can be guided from a vertical fitting position into a substantially horizontal feeding position.

5. Piston ring magazine according to claim 4, **characterised in that** the upper part (2) corresponds substantially to the length of a transport aid which receives a plurality of piston rings in a joint-orientated and form-fitting manner.

6. Piston ring magazine according to claim 4 or 5, **characterised in that** the transport aid can be positioned at least in end regions of the upper part (2) which are formed by top plates (8) and base plates (9).

7. Piston ring magazine according to one of the claims 4 to 6, **characterised in that** the upper part (2) is connected to the lower part (3) via at least one hinge (4).

8. Piston ring magazine according to one of the claims 4 to 7, **characterised in that** the upper part (2) and the lower part (3) can be rotated relative to each other in a vertical position aligned with each other, in particular by 180°.

9. Piston ring magazine according to one of the claims 4 to 8, **characterised in that** the upper part (2) and the lower part (3) is formed by the components (12) which radially surround the transport aid receiving the piston rings, have a rod-like configuration at a spacing from each other in the circumferential direction and are guided in the region of their ends in top plates (8) and base plates (9) which have an annular or disc-like configuration.

10. Piston ring magazine according to one of the claims 4 to 9, **characterised by** a securing element (15) which, subsequent to feeding the upper part (2) with the piston rings, can be positioned in the piston ring-side end region of the upper part (2), which end region is orientated towards the lower part (3).

11. Piston ring magazine according to one of the claims 4 to 10, **characterised in that** the securing element (15) is configured in the manner of piston ring retaining tongs.

12. Piston ring magazine according to one of the claims 4 to 11, **characterised by** a magazine work arbour which can be brought into operational connection with the lower part (3) and can be positioned in the region of a piston ring fitting station.

## Revendications

1. Procédé pour le positionnement de segments de piston orientés vers la coupe dans la zone d'un magasin de segments de piston (1), du fait qu'au moins une partie (2) du magasin de segment de piston (1) disposé verticalement est coudée de telle sorte que la partie (2) peut être transférée de la position de montage verticale dans une position d'alimentation sensiblement horizontale, les segments de piston disposés par complémentarité de forme sur un moyen auxiliaire de transport allongé sont introduits conjointement avec le moyen de transport auxiliaire dans une zone de logement (5), prévue à cet effet, de la partie (2) coudée, un élément de blocage (15) est introduit dans la zone d'extrémité, côté segment de piston, tournée vers la partie (3) verticale, de la partie (2) et la partie (2) coudée est basculée ensuite en arrière de nouveau dans sa position de départ verticale et amenée en liaison active avec la partie (3) verticale.

2. Procédé selon la revendication 1, **caractérisé en ce que** la partie (2) est tournée avant son coudage à partir d'une position de montage d'un angle défini autour de son axe longitudinal (6) et, à la suite du guidage arrière, est tournée en arrière de la position d'alimentation sensiblement horizontale dans la position de départ verticale à nouveau dans la position de montage.

3. Procédé selon la revendication 1 ou 2, **caractérisé en ce que**, à la suite du retour de la partie (2) dans la position de montage, l'élément de blocage (15) est enlevé, de sorte que les segments de piston tombent par une zone d'introduction (14) sur la partie (3) inférieure du magasin de segments de piston (1) sous l'effet de leur propre poids dans la position de montage.

4. Magasin de segments de piston, pouvant être utilisé pour le montage de segments de piston, constitué d'une partie supérieure (2) et d'une partie inférieure (3), la partie supérieure (2) pouvant être déplacée par rapport à la partie inférieure (3), **caractérisé en ce que** la partie supérieure (2) est réalisée plus longue que la partie inférieure (3) et la partie supérieure (2) peut être guidée à partir d'une position de montage verticale dans une position d'alimentation sensiblement horizontale.

5. Magasin de segments de piston selon la revendication 4, **caractérisé en ce que** la partie supérieure (2) correspond sensiblement à la longueur d'un moyen auxiliaire de transport recevant plusieurs segments de piston orientés vers la coupe et par complémentarité de forme.

6. Magasin de segments de piston selon la revendication 4 ou 5, **caractérisé en ce que** le moyen auxiliaire de transport peut être positionné au moins dans des zones d'extrémité, formées par des plaques supérieures (8) et des plaques inférieures (9), de la partie supérieure (2).

7. Magasin de segments de piston selon l'une quelconque des revendications 4 à 6, **caractérisé en ce que** la partie supérieure (2) est reliée à la partie inférieure (3) au moyen d'au moins une charnière (4).

8. Magasin de segments de piston selon l'une quelconque des revendications 4 à 7, **caractérisé en ce que** la partie supérieure (2) et la partie inférieure (3) peuvent tourner l'une par rapport à l'autre, en particulier de 180°, dans une position verticale orientée l'une par rapport à l'autre.

9. Magasin de segments de piston selon l'une quelconque des revendications 4 à 8, **caractérisé en ce que** la partie supérieure (2) et la partie inférieure (3) sont formées par des composants (12) entourant radialement les moyens de transport auxiliaires recevant des segments de piston, conçus en forme de barre et espacés les uns des autres dans le sens périphérique, lesquels composants sont guidés dans la zone de leurs extrémités dans des plaques (8) supérieures et inférieures (9) conçues en forme de bague ou de disque.

10. Magasin de segments de piston selon l'une quelconque des revendications 4 à 9, **caractérisé par** un élément de blocage (15), qui peut être positionné à la suite de l'alimentation de la partie supérieure (2) avec les segments de piston dans la zone d'extrémité côté segment de piston, tournée vers la partie inférieure (3), de la partie supérieure (2).

11. Magasin de segments de piston selon l'une quelconque des revendications 4 à 10, **caractérisé en ce que** l'élément de blocage (15) est conçu à la façon d'une pince de retenue de segments de piston.

12. Magasin de segments de piston selon l'une quelconque des revendications 4 à 11, **caractérisé par** une broche de serrage de magasin, qui peut être amenée en liaison active avec la partie inférieure (3) et peut être positionnée dans la zone d'une station de montage de segment de piston.
